# EUROPÄISCHE PATENTSCHRIFT

(11) **EP 1 782 999 B1**
(45) Veröffentlichungstag und Bekanntmachung des Hinweises auf die Patenterteilung: **19.08.2009**
(21) Anmeldenummer: 06022832.7
(22) Anmeldetag: 02.11.2006
(51) Int. Cl.: B60P 3/34

(54) **Wohnmobil mit Tretantrieb**
Mobile home having a pedal drive
Module de camping avec un entrainement à pédales

(30) Priorität: 08.11.2005 DE 202005017433 U
(43) Veröffentlichungstag der Anmeldung: 09.05.2007
(73) Patentinhaber: Heisterkamp GmbH & Co. KG, 46354 Südlohn (DE)
(72) Erfinder: Heisterkamp, Norbert, Dr.-Ing., 46354 Südlohn (DE)
(74) Vertreter: Kötter, Ulrich

(56) Entgegenhaltungen:
- DE-A1- 1 455 486
- DE-U1- 20 008 838
- FR-A- 883 169
- FR-A- 1 070 557
- FR-A- 1 253 498
- GB-A- 457 169
- US-A- 3 024 059

## Beschreibung

Die Erfindung betrifft ein Wohnmobil, umfassend ein Tretantriebsmodul und ein Wohnmodul nach dem Patentanspruch 1. Die Erfindung betrifft weiterhin ein Wohnmodul nach dem Patentanspruch 15.

Der Einsatz von Wohnmobilen erfreut sich unter Campern großer Beliebtheit. Sie ermöglichen Urlaube mit großer Flexibilität, da sie mittels Kraftfahrzeugen leicht bewegt werden können und ihrem Benutzer während der Urlaubsreise eine kontinuierliche Unterkunft bieten.

Nachteilig an den bekannten Wohnmobilen ist, dass diese die Nutzung eines Kraftfahrzeugs zu deren Bewegung erfordern. Somit sind sie für Anhänger des Fahrradsports, die Fahrradtouren über mehrere Tage durchführen, nicht geeignet. Ein gattungsgemäßes Wohnmobil für Fahrräder ist aus der DE-200 08 838 U bekannt. Sie müssen im Voraus bestimmte Übernachtungspunkte definieren, wo entsprechende Unterkünfte - oftmals weit im Voraus - gebucht werden müssen. Eine kurzfristige Änderung einer geplanten Fahrradroute ist dabei oftmals nicht oder nur mit erheblichen Aufwendungen möglich. Hier ist ein Wohnmobil erforderlich, welches von einem Fahrradfahrer über einen Tretantrieb bewegt werden kann und somit die Flexibilität und den Komfort des bekannten Campingurlaubs mit Wohnwagen mit der körperlichen Ertüchtigung und Erholsamkeit einer Fahrradtour verbindet.

Hier will die Erfindung Abhilfe schaffen. Der Erfindung liegt die Aufgabe zu Grunde, ein Wohnmobil zu schaffen, welches über einen Tretantrieb bewegt werden kann und somit das Mitführen im Rahmen einer Fahrradtour ermöglicht. Gemäß der Erfindung wird diese Aufgabe durch die Merkmale des Patentanspruchs 1 gelöst.

Mit der Erfindung ist ein Wohnmobil geschaffen, welches über einen Tretantrieb bewegt werden kann und somit das Mitführen im Rahmen einer Fahrradtour ermöglicht.

In Weiterbildung der Erfindung sind die Seitenwände mehrteilig ausgebildet und der Deckel weist eine Vorrichtung zum Verstauen wenigstens eines Teils der Seitenwände auf. Hierdurch ist eine kompakte Anordnung der Seitenwände innerhalb des kofferartigen Anhängers ermöglicht.

In Ausgestaltung der Erfindung weisen die Seitenwände an den Längsseiten des Wohnmobils jeweils eine kastenförmige Ausbuchtung auf, in der eine Liegefläche gebildet ist. Hierdurch lassen sich innerhalb des Wohnmobils zusätzlich neben den schon vorhandenen Bänken zwei Schlafplätze einrichten.

In weiterer Ausgestaltung der Erfindung ist an wenigstens einer Längsseite des Wohnmobils die Seitenwand der kastenförmigen Ausbuchtung in eine horizontale Lage klappbar und derart ausgebildet, dass die mit einer angrenzenden klappbaren Seitenwand der kastenförmigen Ausbuchtungen eines zweiten, parallel angeordneten Wohnmobils verbindbar ist, so dass eine durchgehende Liegefläche gebildet ist. Hierdurch ist eine Verbindung mehrerer Wohnmobile unter Schaffung zusätzlicher Schlafplätze ermöglicht. Im Rahmen einer Fahrradtour, die als Gruppenfahrt durchgeführt ist, kann dadurch die Anzahl der erforderlicherweise mitzuführenden Wohnmobile reduziert werden.

In Weiterbildung der Erfindung ist wenigstens ein Teil der Seitenwände derart ausgebildet, dass er zwischen dem Deckel des Wohnmobils und dem Deckel eines zweiten, neben dem ersten positionierten Wohnmobils fixierbar ist, so dass durch die beiden Wohnmobile eine gemeinsame Dachfläche gebildet ist. Hierdurch wird die Schaffung eines gemeinsamen durch zwei oder mehrere Wohnmobile geschaffenen Wohnraumes ermöglicht.

In weiterer Ausgestaltung der Erfindung weist das Tretantriebsmodul zwei nebeneinander angeordnete Sitzvorrichtungen mit jeweils zugeordneten Pedalen auf. Hierdurch ist die Bewegung des Wohnmobils durch zwei Personen ermöglicht, wodurch die auf eine Person fallende erforderliche Tretleistung halbiert wird. Das Vorsehen von mehr als zwei nebeneinander angeordneten Sitzvorrichtungen ist möglich, jedoch sind die verkehrsrechtlichen Vorschriften zu beachten.

Vorteilhaft ist den beiden Sitzvorrichtungen jeweils eine Lenkvorrichtung zugeordnet, wobei das lenkbare Rad (12) des Wohnmobils nur über eine der beiden Lenkvorrichtungen (116) steuerbar ist. Hierdurch ist die Lenkung des Wohnmobils durch eine der beiden Personen ermöglicht; die zweite, nicht mit dem lenkbaren Rad des Wohnmobils verbundene Lenkvorrichtung dient lediglich zum Festhalten seitens des Fahrers. Bevorzugt ist die Lenkvorrichtung über Zahnräder mit dem lenkbaren Rad verbunden. Alternativ ist eine Verbindung mittels Zahnriemen oder Zugstangen möglich.

In weiterer Ausgestaltung der Erfindung sind das Tretantriebsmodul und das Wohnmodul lösbar miteinander verbunden. Hierdurch ist die getrennte Nutzung des Tretantriebsmoduls unter Beibehaltung des errichteten Wohnmoduls an einem Standort ermöglicht.

Bevorzugt ist an dem Tretantriebsmodul ein zuschaltbarer Hilfsmotor angeordnet. Hierdurch ist eine Unterstützung der Benutzer bei der Erbringung der erforderlichen Antriebsleistung ermöglicht. Vorteilhaft ist der Hilfsmotor als Elektromotor ausgeführt.

In Weiterbildung der Erfindung ist eine Deichsel vorgesehen, über die das Wohnmobil an einem Kraftfahrzeug anhängbar ist. Hierdurch ist eine Überbrückung weiterer Strecken mittels eines Kraftfahrzeuges erleichtert.

In weiterer Ausgestaltung der Erfindung ist an der dem Tretantriebsmodul zugewandten Seite eine faltbare Regenhaube vorgesehen. Hierdurch sind die antreibenden Personen gegenüber Wettereinflüssen schützbar.

In Weiterbildung der Erfindung sind an wenigstens einer Seite Vorrichtungen zur Fixierung eines Vorzelts vorgesehen. Hierdurch ist der Wohnraum des Wohnmobils erweiterbar.

In weiterer Ausgestaltung der Erfindung sind an den Längsseiten des Wohnmobils Vorrichtungen zur Fixierung eines Schwimmkörpers angeordnet. Hierdurch ist der Einsatz des Wohnmobils als Hausboot zur Überwindung kurzer Strecken auf dem Wasserwege ermöglicht.

Der Erfindung liegt weiterhin die Aufgabe zu Grunde, ein Wohnmodul zu schaffen, welches an ein Fahrrad angehängt und durch dieses bewegt werden kann. Gemäß der Erfindung wird diese Aufgabe durch die Merkmale des Patentanspruchs 14 gelöst.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

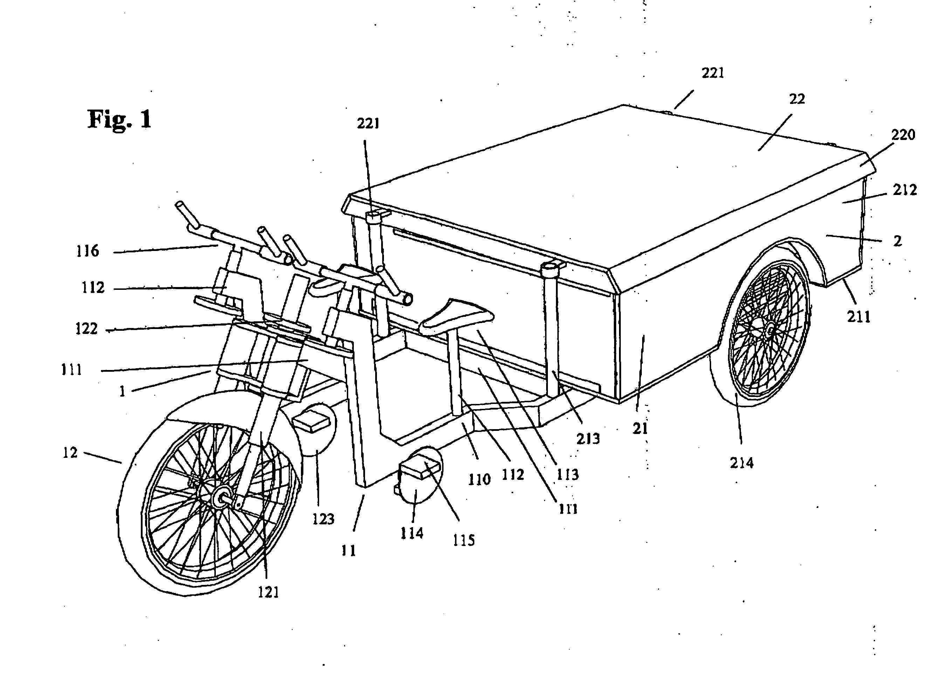

- Figur 1: die dreidimensionale Darstellung eines Wohnmobils mit eingeklapptem Wohnmodul;

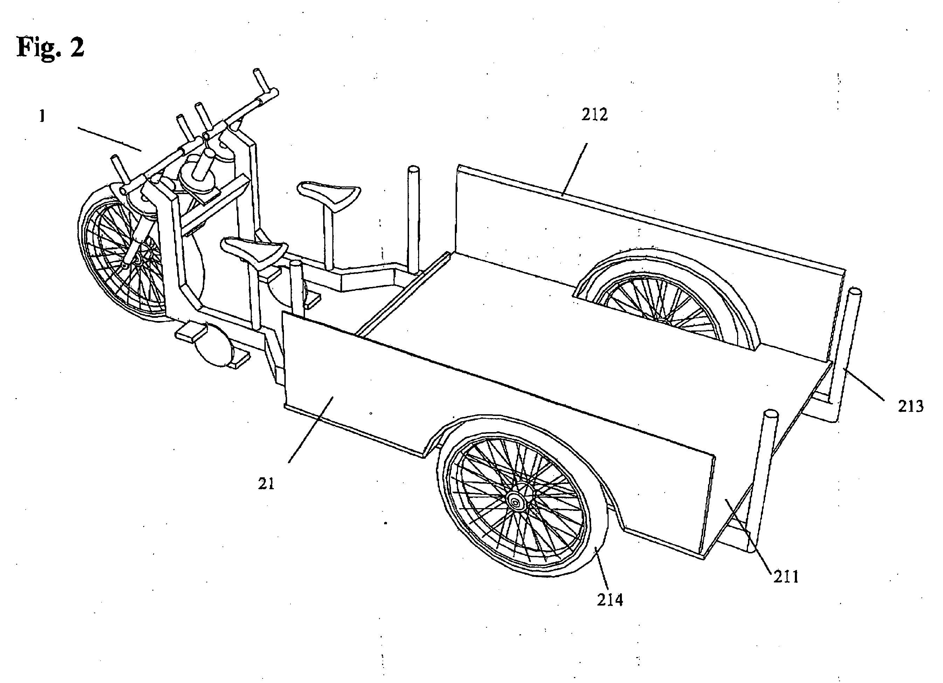

- Figur 2: das Wohnmobil aus Figur 1 mit Wohnmodul nach Entfernung von Deckel und Aufbau;

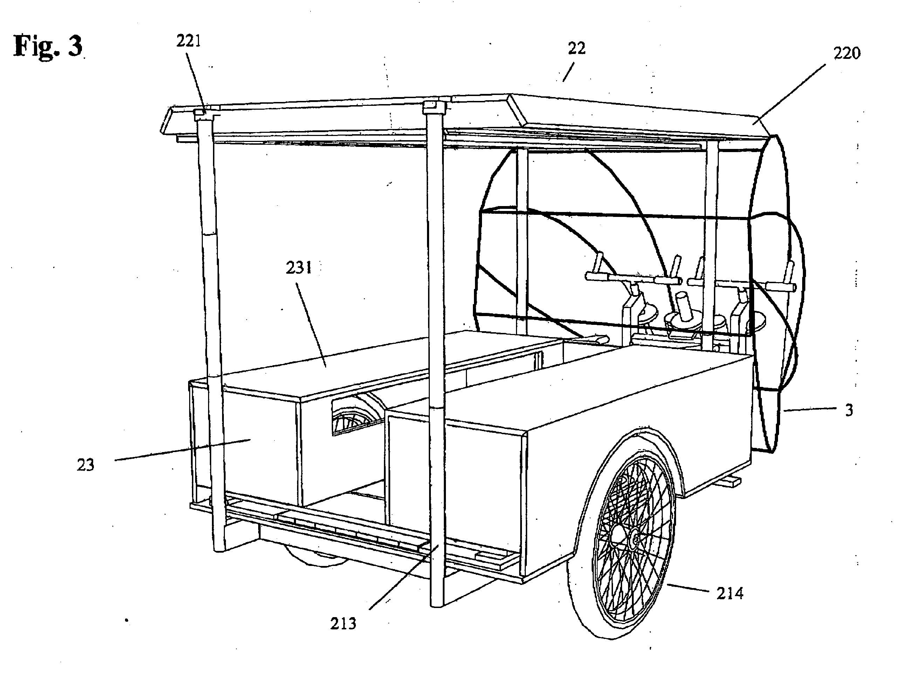

- Figur 3: das Wohnmobil aus Figur 1 mit hochgefahrenem Deckel;
- Figur 4: das Wohnmobil aus Figur 1 mit aufgestelltem Wohnmodul und aufgeklappter Regenhaube;
- Figur 5: die dreidimensionale Darstellung des Wohnmoduls aus Figur 1 mit montiertem Vorzelt;
- Figur 6: die schematische Darstellung des Faltmusters einer Seitenwand mit Querwand;

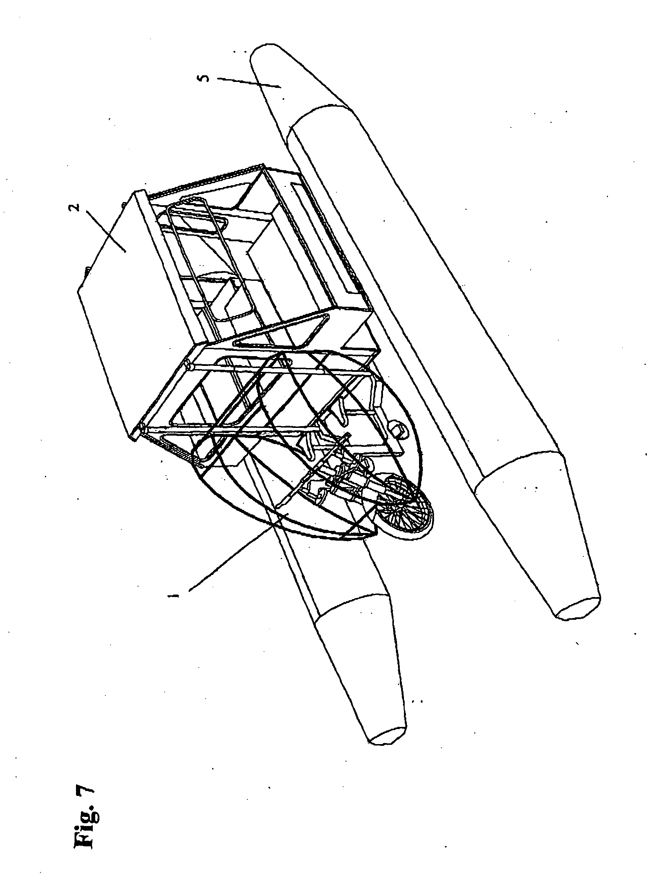

- Figur 7: die Darstellung des Wohnmobils gemäß Figur 2 mit montierten Schwimmkörpern und

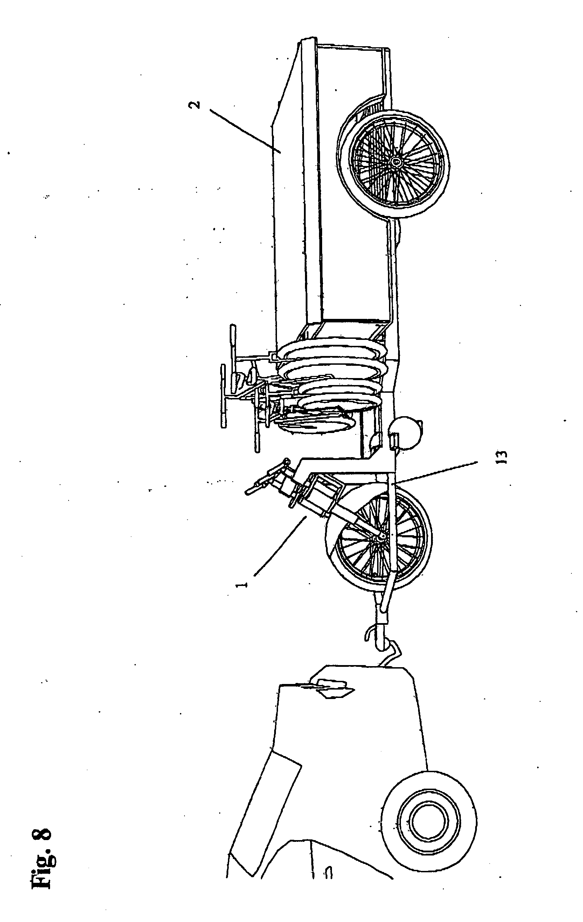

- Figur 8: die Darstellung des Wohnmobils aus Figur 1 mit montierter Deichsel, angehängt an einem PKW.

Das als Ausführungsbeispiel gewählte Wohnmobil besteht im Wesentlichen aus einem Tretantriebsmodul 1 sowie einem an diesem angeordneten Wohnmodul 2. Das Tretantriebsmodul 1 umfasst einen Rahmen 11, der aus zwei im Wesentlichen L-förmig ausgebildeten Längsträgern 110 gebildet ist, die über zwei Querträger 111 miteinander verbunden sind. An ihren dem Boden zugewandten Schenkeln sind die Längsträger nach außen abgewinkelt ausgeführt; an ihren vertikalen Schenkeln sind die Längsträger 110 nach vome in Richtung des Rades 12 abgewinkelt. Orthogonal zu den Längsträgern 110 ist auf diesen gegenüberliegend jeweils ein Vertikalrohr 112 angeordnet, auf dem ein Fahrradsitz 113 befestigt ist. An ihren dem Rad 12 zugewandten vorderen Abschnitten ist an den Längsträgern 110 jeweils ein Tretlager 114 mit Pedalen 115 angeordnet.

An dem vorderen, dem Rad 12 zugewandten Querträger 111 sind zwei Stoßdämpfer 121 befestigt, zwischen denen ein lenkbares Rad 12 angeordnet ist. Es können auch mehrere, in einer lenkbaren Einheit angeordnete Räder vorgesehen sein. An ihrem dem Rad 12 abgewandten Ende ist an den Stoßdämpfern 121 eine Zentralplatte 122 angeordnet, an der eine runde Scheibe 123 befestigt ist. Die runde Scheibe 123 ist mit den Zugstangen 117 eines der beiden Lenker 116 im Eingriff, welche in den abgewinkelten vertikalen Schenkeln der Längsträger 110 drehbar gelagert sind. Alternativ ist auch eine Verbindung von Lenker 116 und lenkbarem Rad 12 mittels Zahnkränzen, Zahnriemen oder ähnlichem möglich. Der zweite Lenker 116 ist nicht mit dem lenkbaren Rad 12 verbunden und dient lediglich dem Fahrer zum Festhalten.

Das Wohnmodul 2 ist in Art eines kofferartigen Anhängers ausgebildet. An den Längsseiten des Wohnmoduls 2 ist jeweils ein Rad 214 angeordnet. Der Grundkörper 21 des Wohnmoduls 2 ist gebildet durch einen Boden 211, der auf den Längsträgern 110 aufliegt, sowie mit durch diesem verbundenen Seitenwänden 212. Beidseitig des Grundkörpers 21 sind auf den Längsträgern 110 Teleskoprohre 113 angeordnet, die einen Deckel 22 aufnehmen. Anstelle der Teleskoprohre 113 können auch Aufsteckrohre oder in sonstiger Weise ausgebildete verlängerbare Stützen vorgesehen sein.

Der Deckel 22 ist - wie der Grundkörper 21 - im Wesentlichen rechteckig ausgeführt; an seine Seiten sind im Wesentlichen nach außen winklig zur Deckelfläche angeordnete Seitenränder 220 angeformt. An den Querseitenrändern 220 sind Aufnahmen 221 für die Teleskoprohre 213 angebracht. Auf der Innenseite des Deckels 220 sind - nicht dargestellte - Fixierungsmittel für Seitenwandteile 243 vorgesehen.

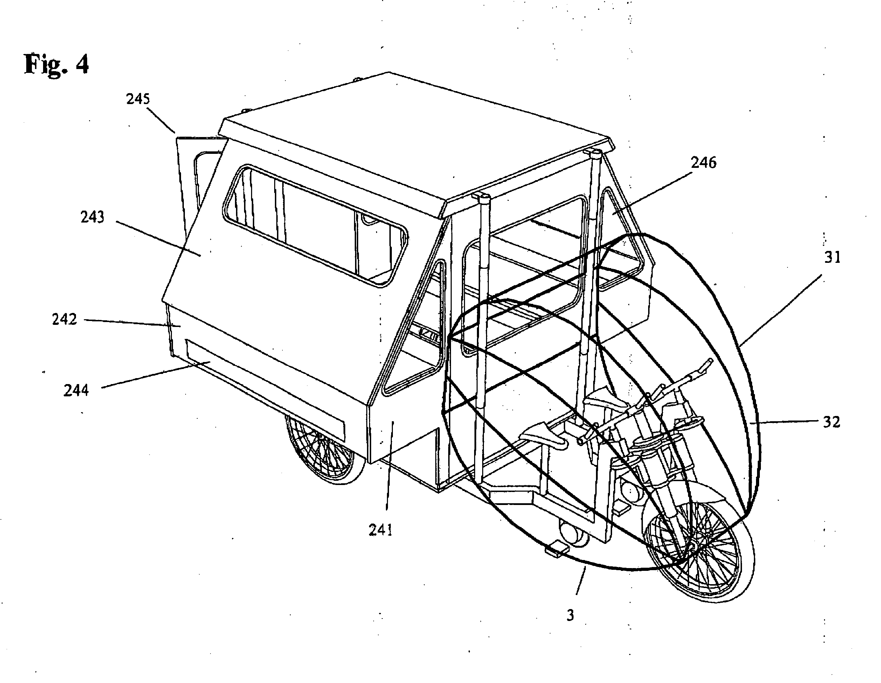

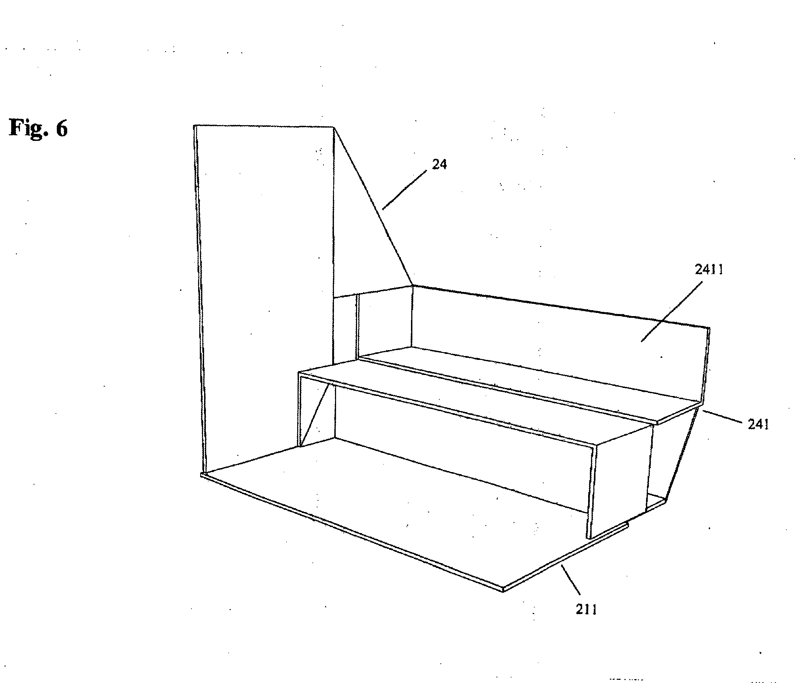

In dem Grundkörper 21 sind gegenüberliegend an den Längsseitenwänden zwei Sitzbänke 23 angeordnet, welche aus einem Faltzuschnitt für die Seitenwände 24 des Wohnmoduls 2 gebildet sind. In Figur 6 ist ein solcher Faltzuschnitt für zwei angrenzende Seitenwände 24 schematisch dargestellt. Im aufgebauten Zustand des Wohnmoduls ist durch den Grundkörper 21, die aufgestellten Seitenwände 24 sowie den Deckel 22 ein Wohnraum gebildet (vgl. Figur 4). Dabei sind durch die Faltzuschnitte an den Längsseiten des Wohnmoduls 2 gegenüberliegend zwei Ausbuchtungen 241 gebildet, welche an ihrer Längsseite jeweils durch eine Seitenwand 2411 begrenzt sind. Zwischen den Seitenwänden 2411 und dem Deckel 22 ist ein schräg geneigt angestelltes Seitenteil 243 angeordnet, welches innerhalb des Deckels 2 verstaubar ist. In den Seitenwänden 2411 der Ausbuchtungen 241 sind jeweils mit Fliegengitter versehene Belüftungsschlitze 244 vorgesehen. Alternativ können an dieser Stelle auch Stauklappen mit Anschlüssen zur Unterbringung von Modulen einer mobilen Photovoltaikanlage vorgesehen sein. Weiterhin sind in den Seitenwänden 24 mit transparenter Kunststofffolie bezogene Fenster 246 eingebracht. Alternativ ist können auch Kunststoffscheiben eingebracht sein. An seiner dem Tretantriebsmodul 1 gegenüberliegenden Seite ist in dem Wohnmodul 2 weiterhin eine Tür 245 vorgesehen. Die Tür 245 kann wahlweise als Schwenk- oder Falttür ausgebildet sein. Zusätzlich können in den Seitenwänden 24 Insektenschutznetze vorgesehen sein. In einer modifizierten Ausführungsform können Teile der Seitenwände 24 als aufblasbare Elemente ausgeführt sein, die sich unter Zuführung von Druckluft aufrichten.

Zur Verbindung mehrerer Wohnmodule 2 sind die Seitenwände 2411 der Ausbuchtungen 241 sowie die Seitenteile 243 schwenkbar ausgebildet. Im Zuge der Verbindung zweier Wohnmodule 2 werden die Seitenwände 2411 horizontal nach außen ausgeklappt und mittels einer - nicht dargestellten - Verbindungsstrebe belastbar miteinander verbunden. Die Seitenteile 243 werden hochgeklappt und mittels - nicht dargestellten - Verbindungsmitteln miteinander verbunden, so dass eine durchgehende Dachfläche gebildet ist. Zur Abdichtung der hierdurch entstehenden seitlichen Öffnungen sind beidseitig der Seitenteile 243 angeordnete - nicht dargestellte - aufgerollte Folienbahnen angeordnet.

An seiner dem Tretantriebsmodul 1 zugewandten Seitenwand 24 ist weiterhin an dem Wohnmodul 2 eine faltbare Regenhaube 3 angeordnet, welche derart geformt ist, dass sie die auf den Fahrradsitzen 113 befindlichen Personen seitlich sowie von oben umgibt. Die Regenhaube 3 ist im Wesentlichen gebildet aus flexiblen Teleskopstangen 31, welche mit transparenter Kunststofffolie 32 bespannt sind. Alternativ zu dieser ausklappbaren Ausführung ist der Einsatz aufblasbarer Elemente anstelle von Teleskopstangen 31 möglich. Die Regenhaube 3 wird in dieser Ausführung durch Aufblasen der Elemente ausgefaltet.

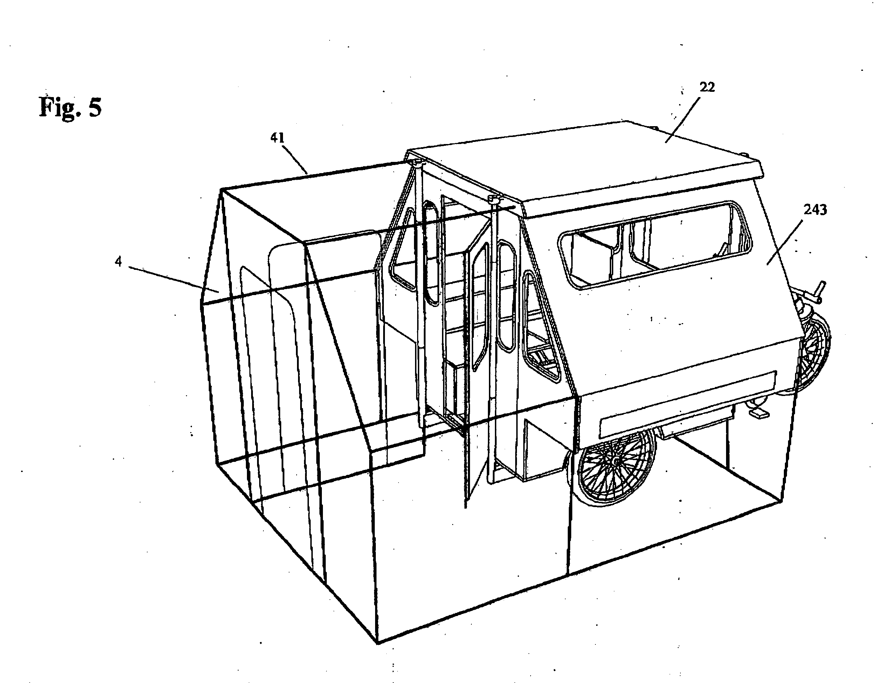

Unterhalb der Ausbuchtungen 241 sind an dem Wohnmodul 2 weiterhin - nicht dargestellte - Vorrichtungen zur Befestigung von Schwimmkörpem 5 vorgesehen. Darüber hinaus sind an der der Regenhaube 3 gegenüberliegenden Seite am Wohnmodul - nicht dargestellte - Klemmen zur Fixierung des Gestänges 41 eines Vorzeltes 4 angeordnet. Weitere Klemmen (oder auch Schienen) sind vorteilhaft umlaufend zur Befestigung einer Schürze angeordnet, wodurch die Schaffung zusätzlichen Stauraumes unterhalb der Ausbuchtungen 241 ermöglicht ist (vgl. Figur 5).

An dem Wohnmodul 2 kann zusätzlich ein vertikal ausziehbares Rohr mit einer Befestigungsvorrichtung für ein Gemeinschaftszelt vorgesehen sein, das vorzugsweise türseitig an dem Wohnmodul 2 befestigt ist. Bei einer Anordnung mehrerer Wohnmobile im Kreis ist so die Befestigung eines Mittelzeltes ermöglicht, wodurch in der Mitte der Wohnmobile ein Gemeinschaftsraum gebildet ist.

An Stelle des als zusammenhängende Einheit ausgebildeten Wohnmobils ist auch die Ausgestaltung des Wohnmoduls als Anhänger für ein handelsübliches Fahrrad Gegenstand der Erfindung. Hierbei sind - wie bei Kfz-Anhängern bekannt - zusätzliche Stützen zur Sicherung gegen Verkippen des Wohnmoduls vorzusehen. Zur Minimierung der durch den erforderlichen Antriebsleistung

Die vorliegende Erfindung umfasst auch gestalterische Varianten, wie beispielsweise eine Queranordnung der Sitzbänke oder die Verwendung von Scheren oder Seilzügen zur Verbindung von Grundkörper 21 und Deckel 22.

## Patentansprüche

1. Wohnmobil, umfassend ein Tretantriebsmodul (1) und ein Wohnmodul (2), welche miteinander verbunden sind, wobei das Tretantriebsmodul (1) in Art eines Fahrrades mit wenigstens einer Sitzvorrichtung (113) und einer Lenkvorrichtung (116) ausgebildet ist und das Wohnmodul (2) in Art eines kofferartigen Anhängers mit wenigstens zwei Rädern (214) ausgebildet ist, **dadurch gekennzeichnet, dass** dessen oberseitiger Deckel (22) über teleskopartige Verbindungsrohre (213) relativ zum unterseitigen Boden (211) im Wesentlichen parallel zudem Boden (211) verschiebbar ist und Seitenwände (24) vorgesehen sind, die zwischen Deckel (22) und Boden (211) fixierbar sind und derart faltbar sind, dass durch die Seitenwände (24) in deren zusammengefalteten Zustand an den Längsseiten des Wohnmobils (2) Sitzbänke (23) gebildet sind.

2. Wohnmobil nach Anspruch 1, **dadurch gekennzeichnet, dass** die Seitenwände (24) mehrteilig ausgebildet sind und der Deckel (22) eine Vorrichtung zum Verstauen wenigstens eines Teils (243) der Seitenwände (24) aufweist.

3. Wohnmobil nach Anspruch 1 oder 2, **dadurch gekennzeichnet, dass** die Seitenwände (24) an den Längsseiten des Wohnmobils jeweils eine kastenförmige Ausbuchtung (241) aufweisen, in der eine Liegefläche (231) gebildet ist.

4. Wohnmobil nach Anspruch 3, **dadurch gekennzeichnet, dass** an wenigstens einer Längsseite des Wohnmobils die Seitenwand (2411) der kastenförmigen Ausbuchtung (241) in eine horizontale Lage klappbar ist und derart ausgebildet ist, dass sie mit einer angrenzenden klappbaren Seitenwand (2411) der kastenförmigen Ausbuchtung (241) eines zweien, parallel angeordneten Wohnmobils verbindbar ist, so dass eine durchgehende Liegefläche gebildet ist.

5. Wohnmobil nach einem der Ansprüche 2 bis 4, **dadurch gekennzeichnet, dass** wenigstens ein Teil (243) der Seitenwände (24) derart ausgebildet ist, dass es zwischen dem Deckel (22) des Wohnmobils und dem Deckel eines zweiten, neben dem ersten positionierten Wohnmobils fixierbar ist, so dass durch die beiden Wohnmobile eine gemeinsame Dachfläche gebildet ist.

6. Wohnmobil nach einem der vorgenannten Ansprüche, **dadurch gekennzeichnet, dass** das Tretantriebsmodul (1) zwei nebeneinander angeordnete Sitzvorrichtungen (113) mit jeweils zugeordneten Pedalen (115) aufweist.

7. Wohnmobil nach Anspruch 6, **dadurch gekennzeichnet, dass** den beiden Sitzvorrichtungen (113) jeweils eine Lenkvorrichtung (116) zugeordnet ist, wobei das lenkbare Rad (12) des Wohnmobils nur über eine der beiden Lenkvorrichtungen (116) steuerbar ist.

8. Wohnmobil nach Anspruch 7, **dadurch gekennzeichnet, dass** die Lenkvorrichtungen (116) über Zahnräder (117, 123) mit dem lenkbaren Rad (12) verbunden sind.

9. Wohnmobil nach einem der vorgenannten Ansprüche, **dadurch gekennzeichnet, dass** das Tretantriebsmodul (1) und das Wohnmodul (2) lösbar miteinander verbunden sind.

10. Wohnmobil nach einem der vorgenannten Ansprüche, **dadurch gekennzeichnet, dass** an dem Tretantriebsmodul ein zuschaltbarer Hilfsmotor angeordnet ist.

11. Wohnmobil nach einem der vorgenannten Ansprüche, **dadurch gekennzeichnet, dass** eine Deichsel (13) vorgesehen ist, über die das Wohnmobil an einem Kraftfahrzeug anhängbar ist.

12. Wohnmobil nach einem der vorgenannten Ansprüche, **dadurch gekennzeichnet, dass** an der dem Tretantriebsmodul (1) zugewandten Seiten eine faltbare Regenhaube (3) vorgesehen ist.

13. Wohnmobil nach einem der vorgenannten Ansprüche, **dadurch gekennzeichnet, dass** an wenigstens einer Seitenwand (24) Vorrichtungen zur Fixierung eines Vorzeltes (4) vorgesehen sind.

14. Wohnmobil nach einem der vorgenannten Ansprüche, **dadurch gekennzeichnet, dass** an dessen Längsseiten Vorrichtungen zur Fixierung eines Schwimmkörpers (5) angeordnet sind.

15. Wohnmodul nach einem der Ansprüche 1 bis 5, wobei das Wohnmodul (2) eine Deichsel zur Anhängung an ein Fahrrad oder zum Ziehen von Hand aufweist.

## Claims

1. Mobile home, having a pedal drive module (1) and a living module (2) which are joined together and where the pedal drive module (1) is constructed in the form of a pedal cycle with at least one seating means (113) and a steering means (116) and the living module (2) is constructed in the form of a box-like trailer with at least two wheels (214), **characterised in that** the upper-side cover (22) of the mobile home can be displaced relative to the under-side floor (211) and essentially parallel to the floor (211) by telescopic connecting tubes (213) and **in that** side walls (24) are provided which can be fastened between the cover (22) and the floor (211) and which can be folded so that, when folded up, the side walls (24) form seating means (23) along the longer sides of the mobile home (2).

2. Mobile home in accordance with claim 1, **characterised in that** the side walls (24) are constructed to comprise more than one part and the cover (22) incorporates a means of stowing at least one part (243) of the side walls (24).

3. Mobile home in accordance with claim 1 or 2, **characterised in that** the side walls (24) incorporate on each of the longer sides of the mobile home a box-shaped interior-space extension (241) in which a lying surface (231) is formed.

4. Mobile home in accordance with claim 3, **characterised in that** on at least one of the longer sides of the mobile home the side wall (2411) of the box-shaped interior-space extension (241) can be folded into a horizontal position and is constructed such that it can be joined to an adjacent foldable side wall (2411) of the box-shaped interior-space extension (241) of a second mobile home disposed parallel so as to form a lying surface running all the way through it.

5. Mobile home in accordance with any of claims 2 to 4, **characterised in that** at least one part (243) of the side walls (24) is constructed so that it can be fastened between the cover (22) of the mobile home and the cover of a second mobile home positioned next to the first so that the two mobile homes form a common roof area.

6. Mobile home in accordance with any of the aforesaid claims, **characterised in that** the pedal drive module (1) incorporates two seating means (113) which are disposed one beside the other and to each of which pedals (115) are assigned.

7. Mobile home in accordance with claim 6, **characterised in that** each of the two seating means (113) is assigned a steering means (116), where the steerable wheel (12) of the mobile home can be steered with only one of the two steering means (116).

8. Mobile home in accordance with claim 7, **characterised in that** the steering means (116) are connected to the steerable wheel (12) by toothed cogs (117, 123).

9. Mobile home in accordance with any of the aforesaid claims, **characterised in that** the pedal drive module (1) and the living module (2) are detachably joined together.

10. Mobile home in accordance with any of the aforesaid claims, **characterised in that** a connectible auxiliary motor is disposed on the pedal drive module.

11. Mobile home in accordance with any of the aforesaid claims, **characterised in that** a connecting means (13) by which the mobile home can be attached to a motor vehicle is provided for.

12. Mobile home in accordance with any of the aforesaid claims, **characterised in that** a foldable rain hood (3) is provided for on the sides facing the pedal drive module (1).

13. Mobile home in accordance with any of the aforesaid claims, **characterised in that** on at least one side wall (24) means for fastening a soft front cover (4) to it are provided for.

14. Mobile home in accordance with any of the aforesaid claims, **characterised in that** on the longer sides of the mobile home means for fastening a float element (5) to it are disposed.

15. Living module in accordance with any of claims 1 to 5, **characterised in that** the living module (2) incorporates a means for attaching it to a pedal cycle or for towing it by hand.

## Revendications

1. Tricycle de camping compren
ant un module d'entraînement à pédales (1) et un module de camping (2) reliés entre eux, le module d'entraînement à pédales (1) ayant la forme d'un tricycle avec au moins un dispositif à selle (113) et un dispositif de direction (116), et le module de camping (2) ayant la forme d'une remorque coffre équipée d'au minimum deux roues (214), **caractérisé en ce que** le couvercle supérieur (22) du module de camping est déplaçable, via des tubes de liaison (213) télescopiques, relativement au fond (211) formant le côté inférieur, de façon essentiellement parallèle au fond (211) et qu'ont été prévues des parois latérales (24) fixables entre le couvercle (22) et le fond (211) et pliables de telle sorte que ces parois latérales (24) forment, à l'état replié, des bancs (23) où s'asseoir sur les côtés longitudinaux du module de camping (2).

2. Tricycle de camping selon la revendication 1, **caractérisé en ce que** les parois latérales (24) sont configurées en plusieurs parties et que le couvercle (22) comporte un dispositif permettant de ranger au moins une partie (243) des parois latérales (24).

3. Tricycle de camping selon la revendication 1 ou 2, **caractérisé en ce que** les parois latérales (24) situées sur les côtés longitudinaux du module de camping présentent chacune un creux (241) en forme de caisson dans lequel est configurée une surface de couchage (231).

4. Tricycle de camping selon la revendication 3, **caractérisé en ce que** sur au moins un côté longitudinal du module de camping la paroi latérale (2411) du creux (241) en forme de caisson est rabattable en position horizontale et configurée de sorte à pouvoir la relier à la paroi latérale (2411) limitrophe repliable du creux (241) en forme de caisson d'un deuxième module de camping agencé parallèlement, de sorte à former une surface de couchage continue.

5. Tricycle de camping selon l'une des revendications 2 à 4, **caractérisé en ce qu'**au moins une partie (243) des parois latérales (24) est configurée de sorte à pouvoir la fixer entre le couvercle (22) du module de camping et le couvercle d'un deuxième module de camping positionné à côté du premier, de sorte que les deux modules de camping forment une surface toiturée conjointe.

6. Tricycle de camping selon l'une des revendications précédentes, **caractérisé en ce que** le module d'entraînement à pédales (1) comporte deux dispositifs à selle (113) agencés l'un à côté de l'autre avec leurs pédales (115) respectivement affectées.

7. Tricycle de camping selon la revendication 6, **caractérisé en ce qu'**à chacun des deux dispositifs à selle (113) est affecté un dispositif de direction (116), la roue directionnelle (12) du tricycle de camping n'étant pilotable que par l'un des deux dispositifs de direction (116).

8. Tricycle de camping selon la revendication 7, **caractérisé en ce que** les dispositifs de direction (116) sont reliés par des roues dentées (117, 123) avec la roue directionnelle (12).

9. Tricycle de camping selon l'une des revendications précédentes, **caractérisé en ce que** le module d'entraînement à pédales (1) et le module de camping (2) sont reliés entre eux de façon détachable.

10. Tricycle de camping selon l'une des revendications précédentes, **caractérisé en ce qu'**un moteur auxiliaire embrayable a été agencé contre le module d'entraînement à pédales.

11. Tricycle de camping selon l'une des revendications précédentes, **caractérisé en ce qu'**est prévu un timon (13) permettant d'accrocher le tricycle à un véhicule motorisé.

12. Tricycle de camping selon l'une des revendications précédentes, **caractérisé en ce qu'**il est prévu, sur les côtés tournés vers le module d'entraînement à pédales (1), un capotage (3) pliant contre la pluie.

13. Tricycle de camping selon l'une des revendications précédentes, **caractérisé en ce que** sur au moins une paroi latérale (24) ont été prévus des dispositifs pour fixer un auvent (4) de tente.

14. Tricycle de camping selon l'une des revendications précédentes, **caractérisé en ce que** sont agencés sur ses côtés longitudinaux des dispositifs servant à fixer un corps flottant (5).

15. Module de camping selon l'une des revendications 1 à 5, ledit module de camping (2) présentant un timon permettant de l'accrocher à une bicyclette ou de le tracter à la main.
